# FASCICULE DE BREVET EUROPEEN

(11) **EP 2 133 952 B1**
(45) Date de publication et mention de la délivrance du brevet: **23.03.2016**
(21) Numéro de dépôt: 09161992.4
(22) Date de dépôt: 05.06.2009
(51) Int. Cl.: H01M 10/625, H01M 10/6556, H01M 10/6567, H01M 10/613, H01M 10/6563, H01M 10/6572, H01M 10/0525

(54) **Module de contrôle d'une température d'une source d'alimentation électrique d'un véhicule automobile.**
Modul zur Temperaturkontrolle einer Stromversorgungsquelle in einem Kraftfahrzeug
Module for controlling the temperature of an electric power source of an automobile.

(30) Priorité: 11.06.2008 FR 0803237
(43) Date de publication de la demande: 16.12.2009
(73) Titulaire: Valeo Systèmes Thermiques, 78321 Le Mesnil Saint Denis Cedex (FR)
(72) Inventeur: Neveu, Daniel, 91300, MASSY (FR); Loup, Didier, 78310, MAUREPAS (FR); Feuillard, Vincent, 78320, LE MESNIL SAINT DENIS (FR)

(56) Documents cités:
- WO-A-2008/001017
- FR-A- 2 903 057
- JP-A- 11 176 487
- US-A1- 2003 064 283
- US-A1- 2004 135 550
- US-A1- 2006 216 582

## Description

La présente invention est du domaine des modules de contrôle de la température d'une source d'alimentation électrique d'un véhicule automobile. Elle a pour objet un tel module.

Dans le domaine automobile, on connaît des véhicules qui sont équipés d'une source d'alimentation électrique pour la propulsion du véhicule. Une telle source est par exemple constituée d'une pluralité de batteries, telles que des batteries Lithium-Ion ou analogues, ou d'une pluralité de piles ou analogues. Le véhicule est indifféremment un véhicule électrique dont la propulsion est uniquement due à la source d'alimentation électrique ou un véhicule hybride dont la propulsion est assurée alternativement ou simultanément par la source d'alimentation électrique et/ou par un moteur thermique.

Une telle source d'alimentation électrique présente une efficacité optimale lorsque sa température est maintenue dans une gamme de températures de l'ordre de 15°C à 35°C. De même, la durée d'utilisation de la source d'alimentation électrique est d'autant plus longue que la température de cette dernière est maintenue dans cette même gamme de températures.

Il en découle qu'un problème général dans le domaine réside dans un maintien de la source d'alimentation électrique dans une telle gamme de températures, un tel maintien étant recherché tant en phase de roulage du véhicule, c'est-à-dire lorsque le véhicule se déplace, qu'en phase de chargement de la source d'alimentation électrique, en particulier à l'arrêt du véhicule. Le document US 2004/135550 décrit un module de contrôle de température d'une source d'alimentation électrique.

Le but de la présente invention est de proposer un module de contrôle d'une température d'une source d'alimentation électrique d'un véhicule automobile, apte, selon le besoin, à augmenter ou à diminuer la température de la source d'alimentation électrique, le module nécessitant la mise en oeuvre de composants simples, peu encombrants et peu coûteux et permettant toutefois un maintien précis et efficace de la température de la source d'alimentation électrique, dans une gamme étroite de températures, typiquement entre 15°C et 35°C et plus particulièrement entre 20°C et 30°C. Un tel maintien est souhaité efficace tant en phase de roulage du véhicule qu'en phase d'arrêt du véhicule, et plus particulièrement en phase de rechargement de la source d'alimentation électrique. La phase de rechargement se fait notamment lorsque le moteur du véhicule est à l'arrêt et que la source d'alimentation électrique est reliée à un réseau électrique ou à une source d'énergie électrique dédiée.

Le module de la présente invention est un module de contrôle d'une température d'une source d'alimentation électrique d'un véhicule automobile. Le module de contrôle comprend un boîtier délimitant un compartiment de réception de la source d'alimentation électrique.

Selon la présente invention, le compartiment de réception est bordé par une première face d'au moins une cellule thermoélectrique pour modifier la température d'un premier fluide contenu à l'intérieur du compartiment de réception.

La cellule thermoélectrique est notamment une cellule de type Peltier. La cellule thermoélectrique comporte deux faces, aptes à respectivement réchauffer et/ou refroidir un fluide présent à leur contact. Plus particulièrement, la cellule thermoélectrique comporte une première face à même de refroidir un premier fluide présent à son contact et une deuxième face à même de réchauffer un deuxième fluide présent à son contact.

A partir d'une inversion de la polarité du courant électrique appliqué à la cellule thermoélectrique, la première face devient apte à réchauffer le premier fluide tandis que la deuxième face devient apte à refroidir le deuxième fluide. Ainsi, selon les conditions climatiques externes, et plus particulièrement selon une température initiale du premier fluide, le module de la présente invention est apte à refroidir ou réchauffer le premier fluide, à partir d'un choix de polarité du courant appliqué à la cellule thermoélectrique afin de maintenir la température dans le compartiment de réception dans la gamme de températures souhaitée.

Ces dispositions sont telles que la température du premier fluide, contenu à l'intérieur du compartiment, est susceptible d'être abaissée ou augmentée à partir de la mise en oeuvre de la ou des cellule(s) thermoélectrique(s) pour permettre un maintien de la température de la source d'alimentation électrique dans une gamme de températures souhaitée, notamment une gamme s'étendant entre 15°C et 35°C et plus particulièrement entre 20°C et 30°C.

Il résulte de ces dispositions que la température du premier fluide est susceptible d'être modifiée uniquement à partir d'une alimentation en énergie électrique de la ou des cellule(s) thermoélectrique(s) ce qui est aisé à mettre en oeuvre tant en phase de roulage à partir de la source d'alimentation électrique, qu'en phase de rechargement de la source d'alimentation électrique à partir du réseau électrique ou d'une source d'énergie électrique dédiée. Dans ce dernier cas, la mise en oeuvre du module de contrôle selon la présente invention ne consomme pas d'énergie électrique en provenance de la source d'alimentation électrique et ne nécessite pas la mise en oeuvre du moteur du véhicule et/ou d'une installation de chauffage, de ventilation et/ou de climatisation équipant le véhicule.

De préférence, le compartiment loge au moins partiellement un premier dispositif de mise en circulation du premier fluide à l'intérieur du compartiment de réception.

Ces dispositions visent à favoriser le transfert de chaleur entre la cellule thermoélectrique et le premier fluide. De plus, ces dispositions permettent également une distribution et une répartition du premier fluide au sein du compartiment de réception pour assurer une homogénéisation de la température de la source d'alimentation électrique. Une telle homogénéisation facilite le maintien en température de la source d'alimentation électrique dans la gamme de températures souhaitée.

De préférence encore, le premier dispositif est logé au moins partiellement à l'intérieur d'un premier canal de circulation du premier fluide, ménagé à l'intérieur du compartiment de réception et intégrant la première face de la ou des cellule(s) thermoélectrique(s).

Ces dispositions facilitent la circulation du premier fluide à l'intérieur du compartiment de réception et favorisent la modification de la température du premier fluide au contact de la première face de la ou des cellule(s) thermoélectrique(s).

De plus, le boîtier est équipé d'au moins une bouche d'entrée d'air et d'au moins une bouche de sortie d'air pour respectivement permettre une admission à l'intérieur du compartiment de réception et une évacuation hors du compartiment de réception d'un flux d'air de circulation, notamment un flux d'air de circulation provenant de l'extérieur.

Le boîtier comprend avantageusement un deuxième canal de circulation d'un deuxième fluide, intégrant une deuxième face de la cellule thermoélectrique.

Selon l'invention, le premier fluide est constitué par de l'air. Dans ce cas, le premier dispositif est notamment constitué d'un premier pulseur.

Le deuxième fluide est préférentiellement constitué d'air.

Selon une première forme de réalisation, le premier dispositif est à double turbine, dont une première turbine est logée à l'intérieur du premier canal et une deuxième turbine est logée à l'intérieur du deuxième canal.

Selon une deuxième forme de réalisation, le deuxième canal de circulation loge un deuxième dispositif de mise en circulation du deuxième fluide.

De façon particulièrement avantageuse, le boîtier est par exemple constitué d'une enceinte adiabatique.

De préférence, la bouche d'entrée d'air et la bouche de sortie d'air sont conjointement équipées d'un organe de distribution d'air manoeuvrable entre une position de fermeture dans laquelle l'organe de distribution obture simultanément la bouche d'entrée d'air et la bouche de sortie d'air et une position d'ouverture dans laquelle l'organe de distribution autorise simultanément l'évacuation du flux d'air de circulation depuis le compartiment de réception vers l'extérieur du compartiment de réception à travers la bouche de sortie d'air et l'admission du flux d'air de circulation depuis l'extérieur du compartiment de réception vers ce dernier à travers la bouche d'entrée d'air.

La bouche d'entrée d'air et la bouche de sortie d'air sont avantageusement ménagées au débouché d'un conduit de communication aéraulique en liaison aéraulique avec le compartiment de réception. Ce conduit de communication aéraulique loge une cloison de séparation des bouches d'entrée d'air et de sortie d'air. Contre cette cloison de communication aéraulique vient en butée l'organe de distribution en position d'ouverture.

Ces dispositions sont telles qu'en position d'ouverture, la cloison de communication aéraulique et l'organe de distribution isolent l'un de l'autre le flux d'air de circulation admis et le flux d'air de circulation évacué.

La présente invention sera mieux comprise, et des détails en relevant apparaîtront, à la lecture de la description qui va être faite de variantes de réalisation, données à titre d'exemples, en relation avec les figures des planches annexées, dans lesquelles :
les figures 1 à 7 sont des vues schématiques de variantes de réalisation d'un module de contrôle ;
la figure 8 est une vue schématique d'un mode de réalisation d'un module de contrôle selon la présente invention ;
les figures 9 et 10 sont des vues schématiques de détail d'un module selon une variante de réalisation selon l'invention dans laquelle le module comprend un organe de distribution d'air illustré en position de fermeture sur la figure 9 et en position d'ouverture sur la figure 10.

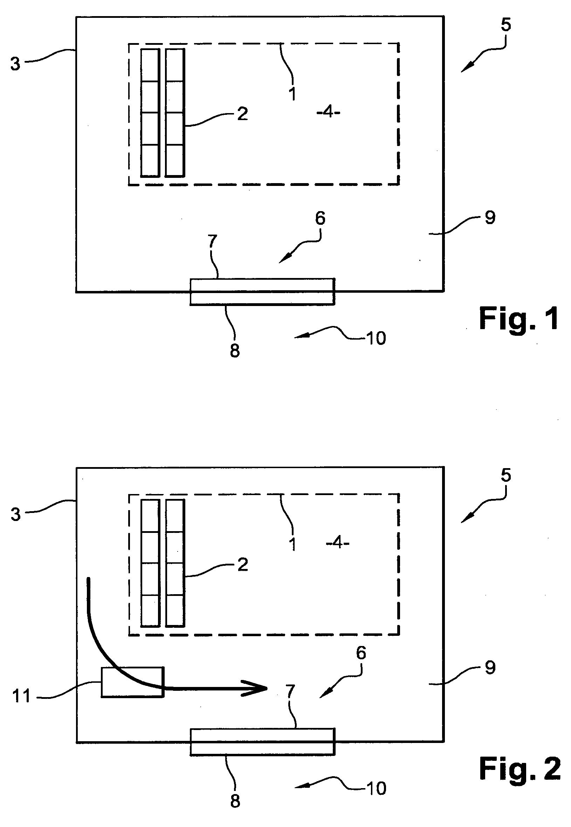

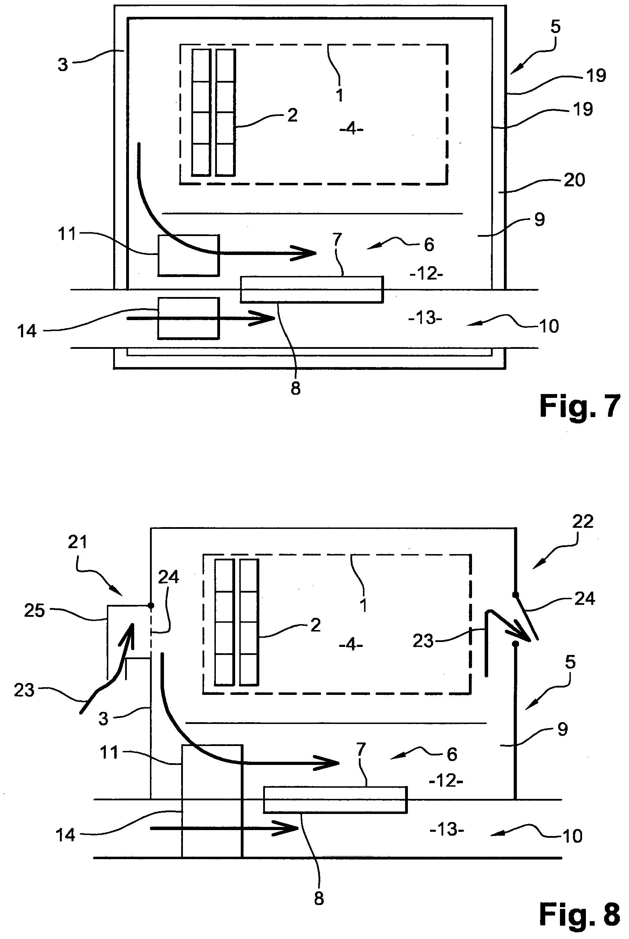

Les figures 1 à 8 présentent des variantes de réalisation d'un module de contrôle d'une température d'une source d'alimentation électrique d'un véhicule automobile, la figure 8 concerne plus particulièrement la présente invention, tandis que les figures 1 et 7 concernent des modules de contrôle d'une température d'une source d'alimentation électrique d'un véhicule automobile non couverts par la présente invention. On notera cependant que les modules de contrôle représentés aux figures 1 à 8 présentent des éléments communs (lesdits éléments ont donc des références numériques identiques) dont la description détaillée ci-dessous peut s'appliquer à chacun des modules représentés à l'une des figures 1 à 8.

Actuellement, des véhicules automobiles sont équipés d'une source d'alimentation électrique 1 pour sa propulsion. Le véhicule est indifféremment un véhicule électrique, dont la propulsion est assurée uniquement par la source d'alimentation électrique 1, ou un véhicule hybride, dont la propulsion est assurée par la mise en oeuvre alternative ou simultanée d'un moteur thermique équipant le véhicule et/ou de la source d'alimentation électrique 1.

La source d'alimentation électrique 1 est constituée d'une batterie 2 ou d'une pluralité de batteries 2. La batterie 2 ou la pluralité de batteries 2 est/sont notamment du type Lithium-Ion. Les batteries 2 sont logées à l'intérieur d'un boîtier 3 délimitant un compartiment de réception 4 des batteries 2. Lors de l'utilisation des batteries 2 en phase de roulage du véhicule ou lors du rechargement électrique des batteries 2, notamment en phase d'arrêt du véhicule, les batteries 2 tendent à s'échauffer. Or, le fonctionnement et la durée de vie des batteries 2 sont optimisés lorsque la source d'alimentation électrique 1 est maintenue à une température optimale de fonctionnement, en particulier une température comprise entre 15°C et 35°C et plus particulièrement entre 20°C et 30°C.

A cet effet, la présente invention propose un module de contrôle 5 de la température de la source d'alimentation électrique 1. Le module de contrôle 5 comprend une cellule thermoélectrique 6 ou une pluralité de cellules thermoélectriques 6. Les cellules thermoélectriques 6 sont notamment des cellules du type Peltier.

Chaque cellule thermoélectrique 6 comporte une première face 7 apte à refroidir à son contact un milieu environnant la première face 7 et une deuxième face 8 apte à réchauffer à son contact un milieu environnant la deuxième face 8.

Selon la présente invention, les cellules thermoélectriques 6 sont disposées en bordure du compartiment de réception 4, de telle sorte que leurs premières faces 7 soient en contact avec un premier fluide 9 contenu à l'intérieur du compartiment de réception 4. Le premier fluide 9 enveloppe les batteries 2 de sorte que les batteries 2 soient en contact le premier fluide 9. De plus, la disposition des cellules thermoélectriques 6 en bordure du compartiment de réception 4 est telle que leurs deuxièmes faces 8 soient en contact avec un deuxième fluide 10 présent à l'extérieur du boîtier 3. Ainsi lors de la mise en oeuvre des cellules thermoélectriques 6, selon un premier mode de fonctionnement, les premières faces 7 refroidissent le premier fluide 9 et les deuxièmes faces 8 réchauffent le deuxième fluide 10.

Par une inversion de la polarité du courant électrique appliqué aux cellules thermoélectriques 6 et selon un deuxième mode de fonctionnement, les fonctions des premières faces 7 et des deuxièmes faces 8 sont inversées, de telle sorte que les premières faces 7 réchauffent le premier fluide 9 et les deuxièmes faces 8 refroidissent le deuxième fluide 10.

Le premier fluide 9 est indifféremment gazeux ou liquide. Préférentiellement, le premier fluide 9 est constitué d'air mais il est susceptible d'être constitué d'un liquide caloporteur, tel que de l'eau ou du glycol par exemple. De même, le deuxième fluide 10 est indifféremment liquide ou gazeux. Préférentiellement le deuxième fluide 10 est constitué d'air.

Sur la figure 2, le boîtier 3 loge un premier dispositif 11 de mise en circulation du premier fluide 9. Le dispositif 11 vise à favoriser le transfert de chaleur entre la cellule thermoélectrique 6 et le premier fluide 9. Le dispositif 11 permet également une distribution et une répartition du premier fluide 9 au sein du compartiment de réception 4 pour assurer une homogénéisation de la température de la source d'alimentation électrique 1. Ainsi, la température du premier fluide 9 refroidi au contact des premières faces 7 des cellules thermoélectriques 6 est homogène au sein du compartiment de réception 4. Une telle homogénéisation facilite le maintien en température de la source d'alimentation électrique 1 dans la gamme de températures souhaitée.

Il en résulte un maintien en température de la source d'alimentation électrique 1 dans la gamme de températures souhaitée. Dans le cas où le premier fluide 9 est un liquide, le premier dispositif 11 est constitué d'une pompe. Dans le cas où le premier fluide 9 est constitué d'air, le premier dispositif 11 est constitué d'un pulseur. On considérera dans la suite de la description, à titre d'exemple particulier de réalisation, que le premier fluide 9 et le deuxième fluide 10 sont constitués d'air.

Selon l'exemple de réalisation de la figure 2, le premier dispositif 11 de mise en circulation du premier fluide 9 est disposé en amont des cellules thermoélectriques 6 dans le sens de circulation du premier fluide 9.

Toutefois, une alternative de réalisation non représentée consiste en une disposition du premier dispositif 11 de mise en circulation du premier fluide 9 en aval des cellules thermoélectriques 6 dans le sens de circulation du premier fluide 9. Dans un tel agencement, le premier dispositif 11 de mise en circulation du premier fluide 9 est une pompe ou un ventilateur centrifuge ou un extracteur d'air ou tout organe analogue.

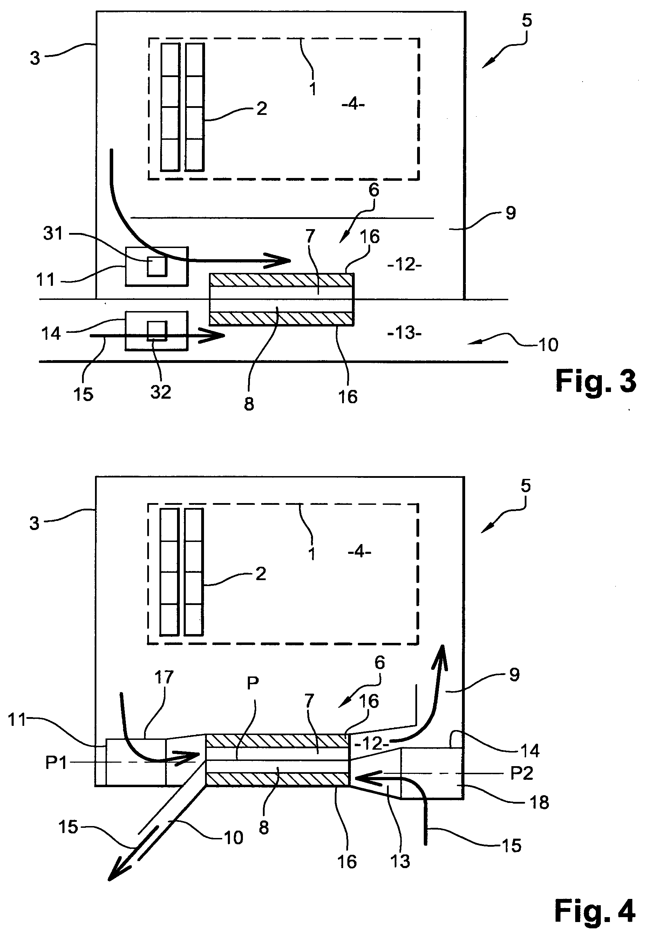

Sur la figure 3, le compartiment de réception 4 loge un premier canal de circulation 12 destiné à recevoir le premier dispositif 11. Le premier canal de circulation 12 intègre les premières faces 7 des cellules thermoélectrique 6. Selon cette variante de réalisation, l'air contenu à l'intérieur du compartiment de réception 4 circule à l'intérieur du compartiment de réception 4 en circuit fermé. Ces dispositions visent à faciliter la circulation d'air à l'intérieur du compartiment de réception 4 pour favoriser l'homogénéisation de la température de l'air et finalement celle des batteries 2. De même, le boîtier 3 comprend un deuxième canal de circulation 13. Les cellules thermoélectriques 6 sont interposées à l'interface entre le premier canal de circulation 12 et le deuxième canal de circulation 13. L'air circule à l'intérieur du deuxième canal de circulation 13 apte à évacuer la chaleur cédée par les deuxièmes faces 8 des cellules thermoélectriques 6.

Pour faciliter cette évacuation, le deuxième canal de circulation 13 loge un deuxième dispositif 14, notamment un deuxième pulseur, apte à faire circuler à l'intérieur du deuxième canal de circulation 13 le deuxième fluide 10. De façon préférentielle, le second flux d'air est un flux d'air extérieur 15 en provenance de l'extérieur du véhicule et rejeté à l'extérieur du véhicule.

Selon l'exemple de réalisation de la figure 3, les premier et deuxième dispositifs 11 et 14 de mise en circulation des premier et deuxième fluides 9 et 10 sont disposés en amont des cellules thermoélectriques 6 dans le sens de circulation respectif du premier fluide 9 et du deuxième fluide 10.

Toutefois, une alternative de réalisation non représentée consiste en une disposition du premier dispositif 11 de mise en circulation du premier fluide 9 en aval des cellules thermoélectriques 6 dans le sens de circulation du premier fluide 9 et/ou en une disposition du deuxième dispositif 14 de mise en circulation du deuxième fluide 10 en aval des cellules thermoélectriques 6 dans le sens de circulation du deuxième fluide 10.

Dans un tel agencement, les premier et deuxième dispositifs 11 et 14 de mise en circulation respective des premier et deuxième fluides 9 et 10 sont des pompes ou des ventilateurs centrifuges ou des extracteurs d'air ou tous organes analogues.

Selon une variante de réalisation, le premier dispositif 11 et le deuxième dispositif 14 sont constitués d'un pulseur à double turbine comprenant un moteur unique mettant ne mouvement une première turbine 31 et une deuxième turbine 32. La première turbine 31 est logée à l'intérieur du premier canal de circulation 12 et la deuxième turbine 32 est logée à l'intérieur du deuxième canal de circulation 13.

Les premières faces 7 et les deuxièmes faces 8 des cellules thermoélectriques 6 sont pourvues d'organes de dissipation thermique 16, tels que des ailettes ou analogues, pour faciliter un échange thermique entre les premières faces 7 et les deuxièmes faces 8 et l'air circulant respectivement à leur contact.

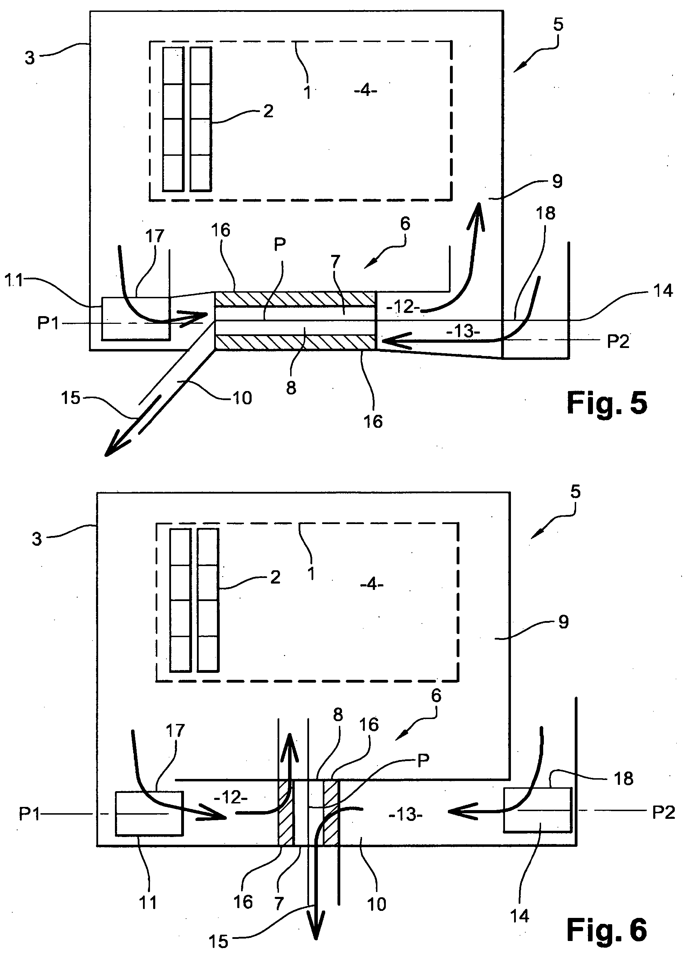

Sur les figures 4 et 5, le premier dispositif 11 et le deuxième dispositif 14 sont constitués respectivement par des pulseurs dont la turbine est respectivement logée à l'intérieur du premier canal de circulation 12 et à l'intérieur du deuxième canal de circulation 13.

Le premier dispositif 11 comporte un premier plan général d'extension P1 disposé parallèlement à un deuxième plan général d'extension P2 du deuxième dispositif 14. Selon une alternative de réalisation, le premier plan général d'extension P1 et le deuxième plan général d'extension P2 sont confondus.

De même, les cellules thermoélectriques 6 sont disposées selon un plan général d'extension P. L'exemple de réalisation de la figure 4 est tel que le plan général d'extension P est parallèle, voire confondu, avec le premier plan général d'extension P1 et le deuxième plan général d'extension P2.

Sur la figure 4, le premier dispositif 11 et le deuxième dispositif 14 comportent respectivement une première bouche d'admission d'air 17 et une deuxième bouche d'admission d'air 18 situées de part et d'autre du premier plan général d'extension P1 et du deuxième plan général d'extension P2.

Sur la figure 5, les première et deuxième bouches d'admission d'air 17 et 18 sont situées d'un même côté du premier plan général d'extension P1 et du deuxième plan général d'extension P2.

Sur la figure 6, le plan général d'extension P des cellules thermoélectriques 6 est sensiblement orthogonal au premier plan général d'extension P1 et au deuxième plan général d'extension P2.

La présente invention couvre également un autre mode de réalisation non représenté dans lequel les premier plan général d'extension P1 et deuxième plan général d'extension P2 sont agencés orthogonalement l'un par rapport à l'autre. Selon cet agencement, le premier dispositif 11 peut être placé dans un plan horizontal, par exemple sous le boîtier 3, et le deuxième dispositif 14 est disposé dans un plan vertical, par exemple le long d'une des parois du boîtier 3.

Ainsi, le plan général d'extension P des cellules thermoélectriques 6 est sensiblement parallèle à l'un des premier ou deuxième plans généraux d'extension P1 et P2.

Alternativement, le plan général d'extension P des cellules thermoélectriques 6 est sensiblement perpendiculaire aux premier et deuxième plans généraux d'extension P1 et P2. Selon cette variante, les cellules thermoélectriques 6 sont disposées sur une autre face du boîtier 3.

Sur la figure 7, le boîtier 3 est constitué d'une enceinte adiabatique formée de deux coques 19 superposées. De façon préférentielle, les deux coques 19 sont homothétiques l'une par rapport à l'autre. Selon une variante de réalisation, les coques 19 sont espacées l'une de l'autre d'un espace interstitiel 20, de préférence d'une épaisseur de l'ordre de 1 à 5 mm.

Sur la figure 8, le boîtier 3 est pourvu d'au moins une bouche d'entrée d'air 21 et d'au moins une bouche de sortie d'air 22. La bouche d'entrée d'air 21 permet l'admission d'un flux d'air de circulation 23 à l'intérieur du boîtier 3. La bouche de sortie d'air 22 permet l'évacuation du flux d'air de circulation 23 en dehors du boîtier 3.

Le flux d'air de circulation 23 est prélevé et rejeté à l'extérieur du véhicule à partir de la mise en oeuvre du premier dispositif 11. La bouche d'entrée d'air 21 et la bouche de sortie d'air 22 sont chacune équipées d'un volet de sélection d'air 24 respectif manoeuvrable entre une position d'ouverture dans laquelle le volet de sélection d'air 24 autorise un passage du flux d'air de circulation 23 à travers la bouche d'entrée d'air 21 et la bouche de sortie d'air 22 et une position de fermeture dans laquelle le volet de sélection d'air 24 interdit un tel passage.

Selon diverses formes de réalisation, la bouche d'entrée d'air 21 et la bouche de sortie d'air 22 sont susceptibles d'être ménagées sur une même paroi du boîtier 3 ou sur des parois opposées du boîtier 3 ou des parois du boîtier 3 sécantes l'une à l'autre. Selon diverses formes de réalisation encore, la manoeuvre des volets de distribution d'air 24 respectifs de la bouche d'entrée d'air 21 et la bouche de sortie d'air 22 est indépendante l'une de l'autre ou est coordonnée.

Selon un autre exemple de réalisation non représentée, le boîtier 3 est pourvu d'une bouche d'entrée d'air 21 permettant une entrée sélective d'un flux d'air de circulation provenant de l'extérieur du véhicule et/ou un flux d'air intérieur provenant de l'intérieur du véhicule.

L'entrée sélective d'un flux d'air provenant de l'extérieur du véhicule et/ou de l'intérieur du véhicule peut se faire par l'intermédiaire du volet de sélection d'air 24 permettant d'avoir plusieurs positions parmi lesquelles, une position d'ouverture permettant une admission d'un flux d'air de circulation uniquement, une position d'ouverture permettant une admission d'un flux d'air intérieur uniquement, une position d'ouverture permettant une admission simultanée d'une portion de flux d'air de circulation et d'une portion de flux d'air intérieur et une position de fermeture interdisant une telle admission d'air.

Un tel agencement est particulièrement adapté lorsque les conditions de température du milieu extérieur du véhicule sont supérieures aux conditions de température du milieu intérieur du véhicule. C'est notamment le cas en été au cours duquel la température de l'air extérieur au véhicule peut être supérieure à 30°C alors que, par l'intermédiaire d'une installation de chauffage, ventilation et/ou climatisation, la température de l'air intérieur au véhicule est d'environ 20°C.

De plus, un tel dispositif permet, par ailleurs, de faire entrer un flux d'air (chaud ou froid) à température optimisée afin que la fourniture d'énergie par le module de contrôle selon la présente invention soit optimale et ainsi réduire les besoins énergétiques du module de contrôle et assurer des économies d'énergie.

En effet, en périodes hivernales, il peut être particulièrement avantageux d'introduire de l'air provenant de l'intérieur du véhicule car celui-ci a été préalablement réchauffé par une installation de chauffage, ventilation et/ou climatisation et ainsi permettre une admission d'air dans le boîtier du module de contrôle à une température particulièrement adaptée à un fonctionnement optimal des batteries 12.

La bouche d'entrée d'air 21 peut être équipée d'un séparateur d'eau 25. Selon l'exemple de réalisation décrit à la figure 8, le séparateur d'eau 25 est constitué d'une chicane. Le séparateur d'eau 25 permet d'éviter une admission intempestive d'eau à l'intérieur du boîtier 3. La bouche d'entrée d'air 21 peut également être munie d'un filtre à particules 26, non représenté, pour retenir des impuretés, telles que des poussières, véhiculées par le flux d'air de circulation 23 et éviter leur admission à l'intérieur du compartiment 4. De façon particulièrement avantageuse, le séparateur d'eau 25 et le filtre à particules 26 sont disposés en amont du premier dispositif 11.

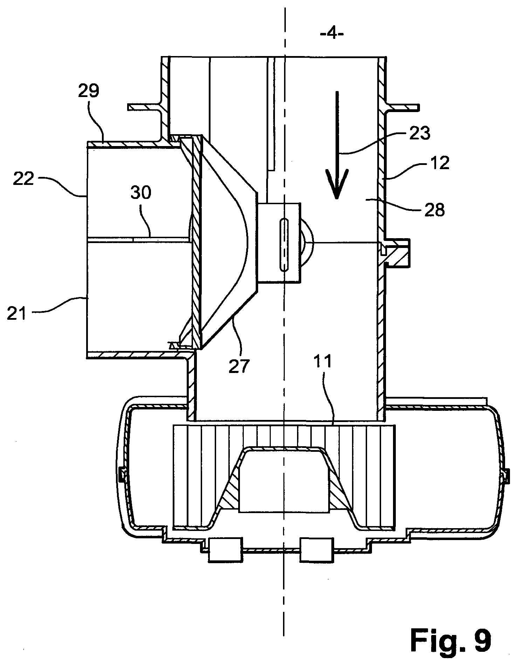

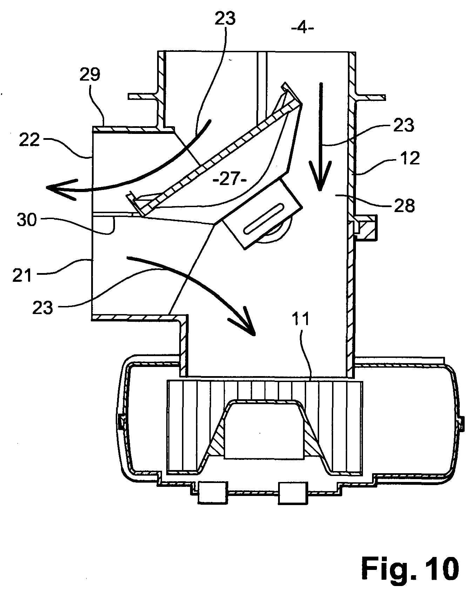

Les figures 9 et 10 sont des vues schématiques de détail d'un module de contrôle selon une variante de réalisation dans laquelle la bouche d'entrée d'air 21 et la bouche de sortie d'air 22 sont conjointement équipées d'un organe de distribution d'air 27.

L'organe de distribution d'air 27 est manoeuvrable entre une position de fermeture, illustrée sur la figure 9, dans laquelle il obture simultanément la bouche d'entrée d'air 21 et la bouche de sortie d'air 22, et une position d'ouverture, illustrée sur la figure 10, dans laquelle il autorise simultanément une admission du flux d'air de circulation 23 depuis l'extérieur du compartiment de réception 4 vers le compartiment de réception 4 à travers la bouche d'entrée d'air 21 et une évacuation du flux d'air de circulation 23 depuis le compartiment de réception 4 vers l'extérieur du compartiment de réception 4 à travers la bouche de sortie d'air 22. L'organe de distribution d'air 27 est notamment logé à l'intérieur du premier canal de circulation 12, en ménageant un conduit de circulation d'air 28 qui reste ouvert quelque soit la position de l'organe de distribution d'air 27.

Ces dispositions visent à permettre une circulation au moins en circuit fermé de l'air à l'intérieur du compartiment de réception 4 quelque soit la position de l'organe de distribution d'air 27.

Plus particulièrement, la bouche d'entrée d'air 21 et la bouche de sortie d'air 22 sont ménagées au débouché d'un conduit de communication aéraulique 29 en liaison avec le premier canal de circulation 12. Le conduit de communication aéraulique 29 loge une cloison de séparation 30 entre les bouches d'entrée 21 et de sortie 22 d'air. L'organe de distribution d'air 27 vient en butée contre la cloison de séparation 30 en position d'ouverture.

En position de fermeture illustrée sur la figure 9, l'air circule à l'intérieur du premier canal de circulation 12 et plus particulièrement à l'intérieur du conduit de circulation 28. En position d'ouverture illustrée sur la figure 10, l'air circule encore à l'intérieur du conduit de circulation 28 mais est également évacué hors du compartiment de réception 4 à travers la bouche de sortie d'air 22 par surpression. Par ailleurs, l'air est admis à l'intérieur du compartiment de réception 4 à travers la bouche d'entrée d'air 21 par dépression. La circulation d'air à l'intérieur du conduit de circulation 28, la dépression d'air et la surpression d'air sont provoquées par la mise en oeuvre du premier dispositif 11, ici réalisé par un pulseur, logé à l'intérieur du premier canal 12 en aval de l'organe de distribution d'air 12 selon le sens de circulation du flux d'air de circulation 23 à l'intérieur du conduit de circulation 28.

Dans l'ensemble des exemples de réalisation décrits précédemment, les premier fluide 9 et deuxième fluide 10 sont indifféremment gazeux ou liquides. Préférentiellement, ils sont constitués d'air mais ils sont susceptibles d'être constitués d'un liquide caloporteur, tel que de l'eau ou du glycol par exemple.

Ainsi, la présente invention couvre les modules de contrôle dans lesquels les échanges thermiques sont du type gaz/gaz, en particulier air/air, ou gaz/liquide, en particulier air/glycol ou air/eau.

De plus, la présente invention couvre également les réalisations dans lesquelles plusieurs dispositifs, notamment des pulseurs, fonctionnent en parallèle.

Les différents exemples de réalisation présentés précédemment enseignent des dispositifs de mise en circulation des premier et deuxième fluides disposés en amont des cellules thermoélectriques dans le sens de circulation des premier et deuxième fluides. Toutefois, la présente invention couvre également les alternatives de réalisation consistant en une disposition des dispositifs de mise en circulation des premier et deuxième fluides disposés en aval des cellules thermoélectriques dans le sens de circulation des premier et deuxième fluides. Dans de tels agencements, les dispositifs de mise en circulation des premier et deuxième fluides disposés sont des pompes ou des ventilateurs centrifuges ou des extracteurs d'air ou tous autres organes analogues.

Bien évidemment, l'invention n'est pas limitée aux modes de réalisation détaillés ci-dessus et fournis uniquement à titre d'exemple et englobe d'autres variantes que pourra envisager l'homme du métier dans le cadre des revendications et notamment toutes combinaisons des différents modes de réalisation décrits précédemment.

## Revendications

1. Module de contrôle (5) d'une température d'une source d'alimentation électrique (1) d'un véhicule automobile, le module de contrôle (5) comprenant un boîtier (3) délimitant un compartiment de réception (4) de la source d'alimentation électrique (1), au moins une cellule thermoélectrique (6) disposée en bordure du compartiment de réception (4),
la cellule thermoélectrique (6) comprenant :
o une première face (7) en contact avec un premier fluide (9) contenu à l'intérieur du compartiment de réception (4) de telle sorte que la source d'alimentation électrique (1) soit en contact avec le premier fluide (9), la cellule thermoélectrique (6) étant apte à modifier la température d'un premier fluide (9) et,
o une deuxième face (8) en contact avec un deuxième fluide (10),
le compartiment de réception (4) logeant au moins partiellement un premier dispositif (11) de mise en circulation du premier fluide (9) disposé au moins partiellement à l'intérieur d'un premier canal de circulation (12) du premier fluide (9) ménagé à l'intérieur du compartiment de réception (4) et intégrant la première face (7),
**caractérisé en ce que** le premier fluide (9) est de l'air, ledit boîtier (3) étant équipé d'au moins une bouche d'entrée d'air (21) et d'au moins une bouche de sortie d'air (22) pour respectivement une admission à l'intérieur du compartiment de réception (4) et une évacuation hors du compartiment (4) d'un flux d'air de circulation (23).

2. Module selon la revendication 1, **caractérisé en ce que** le premier dispositif (11) est constitué d'un premier pulseur.

3. Module selon l'une quelconque des revendications précédentes, **caractérisé en ce que** le boîtier (3) comprend un deuxième canal (3) de circulation d'un deuxième fluide (10) intégrant une deuxième face (8) de la cellule thermoélectrique (6).

4. Module selon l'une quelconque des revendications 1 à 3, **caractérisé en ce que** le deuxième fluide (10) est de l'air.

5. Module selon les revendications 3 et 4, **caractérisé en ce que** le premier dispositif (11) est à double turbine ayant une première turbine (31) logée à l'intérieur du premier canal (12) et une deuxième turbine (32) logée à l'intérieur du deuxième canal (13).

6. Module selon la revendication 4, **caractérisé en ce que** le deuxième canal de circulation loge un deuxième dispositif (14) de mise en circulation du deuxième fluide (10).

7. Module selon l'une quelconque des revendications précédentes, **caractérisé en ce que** le boîtier (3) est constitué d'une enceinte adiabatique.

8. Module selon la revendication 1, **caractérisé en ce que** la bouche d'entrée d'air (21) et la bouche de sortie d'air (22) sont conjointement équipés d'un organe de distribution d'air (27) manoeuvrable entre une position de fermeture dans laquelle l'organe de distribution (27) obture simultanément la bouche d'entrée d'air (21) et la bouche de sortie d'air (22) et une position d'ouverture dans laquelle l'organe de distribution (27) autorise simultanément l'évacuation du flux d'air de circulation (23) depuis le compartiment de réception (4) vers l'extérieur du compartiment de réception (4) à travers la bouche de sortie d'air (22) et l'admission du flux d'air de circulation (23) depuis l'extérieur du compartiment de réception (4) vers le compartiment de réception (4) à travers la bouche d'entrée d'air (21).

9. Module selon la revendication 8, **caractérisé en ce que** la bouche d'entrée d'air (21) et la bouche de sortie d'air (22) sont ménagées au débouché d'un conduit de communication aéraulique (29) en liaison avec le compartiment de réception (4).

10. Module selon la revendication 9, **caractérisé en ce que** le conduit de communication aéraulique (29) loge une cloison de séparation (30) des bouches d'entrée (21) et de sortie (22) d'air.

11. Module selon la revendication 10, **caractérisé en ce que** l'organe de distribution (27) vient en butée en position d'ouverture contre la cloison de séparation (30).

12. Module selon l'une des revendications 1 à 11, **caractérisé en ce que** la bouche d'entrée d'air (21) est équipée d'un séparateur d'eau (25) et/ou d'un filtre à particules (26) disposés en amont du premier dispositif (11).

## Patentansprüche

1. Modul (5) zur Kontrolle einer Temperatur einer Stromversorgungsquelle (1) eines Kraftfahrzeugs, wobei das Kontrollmodul (5) ein Gehäuse (3) enthält, das ein Aufnahmeabteil (4) der Stromversorgungsquelle (1) begrenzt, wobei mindestens eine thermoelektrische Zelle (6) am Rand des Aufnahmeabteils (4) angeordnet ist,
wobei die thermoelektrische Zelle (6) enthält:
o eine erste Seite (7) in Kontakt mit einem ersten Fluid (9), das im Inneren des Aufnahmeabteils (4) enthalten ist, derart, dass die Stromversorgungsquelle (1) mit dem ersten Fluid (9) in Kontakt ist, wobei die thermoelektrische Zelle (6) die Temperatur eines ersten Fluids (9) verändern kann, und
o eine zweite Seite (8) in Kontakt mit einem zweiten Fluid (10),
wobei im Aufnahmeabteil (4) mindestens teilweise eine erste Vorrichtung (11) für die Zirkulation des ersten Fluids (9) untergebracht ist, die mindestens teilweise im Inneren eines ersten Zirkulationskanals (12) des ersten Fluids (9) angeordnet ist, der im Inneren des Aufnahmeabteils (4) ausgespart ist und die erste Seite (7) einbezieht,
**dadurch gekennzeichnet, dass** das erste Fluid (9) Luft ist, wobei das Gehäuse (3) mit mindestens einer Lufteingangsöffnung (21) und mit mindestens einer Luftausgangsöffnung (22) für eine Zufuhr ins Innere des Aufnahmeabteils (4) bzw. eine Abfuhr aus dem Abteil (4) eines Umluftstroms (23) ausgestattet ist.

2. Modul nach Anspruch 1, **dadurch gekennzeichnet, dass** die erste Vorrichtung (11) aus einem ersten Gebläse besteht.

3. Modul nach einem der vorhergehenden Ansprüche, **dadurch gekennzeichnet, dass** das Gehäuse (3) einen zweiten Zirkulationskanal (3) eines zweiten Fluids (10) enthält, der eine zweite Seite (8) der thermoelektrischen Zelle (6) einbezieht.

4. Modul nach einem der Ansprüche 1 bis 3, **dadurch gekennzeichnet, dass** das zweite Fluid (10) Luft ist.

5. Modul nach den Ansprüchen 3 und 4, **dadurch gekennzeichnet, dass** die erste Vorrichtung (11) mit Doppelturbine ist, bei der eine erste Turbine (31) im Inneren des ersten Kanals (12) und eine zweite Turbine (32) im Inneren des zweiten Kanals (13) untergebracht ist.

6. Modul nach Anspruch 4, **dadurch gekennzeichnet, dass** im zweiten Zirkulationskanal eine zweite Zirkulationsvorrichtung (14) des zweiten Fluids (10) untergebracht ist.

7. Modul nach einem der vorhergehenden Ansprüche, **dadurch gekennzeichnet, dass** das Gehäuse (3) aus einer adiabatischen Umhüllung besteht.

8. Modul nach Anspruch 1, **dadurch gekennzeichnet, dass** die Lufteingangsöffnung (21) und die Luftausgangsöffnung (22) gemeinsam mit einem Luftverteilungsorgan (27) ausgestattet sind, das zwischen einer Schließstellung, in der das Verteilungsorgan (27) gleichzeitig die Lufteingangsöffnung (21) und die Luftausgangsöffnung (22) verschließt, und einer Öffnungsstellung betätigbar ist, in der das Verteilungsorgan (27) gleichzeitig die Abfuhr des Umluftstroms (23) vom Aufnahmeabteil (4) nach außerhalb des Aufnahmeabteils (4) durch die Luftausgangsöffnung (22) und die Zufuhr des Umluftstroms (23) von außerhalb des Aufnahmeabteils (4) zum Aufnahmeabteil (4) über die Lufteingangsöffnung (21) erlaubt.

9. Modul nach Anspruch 8, **dadurch gekennzeichnet, dass** die Lufteingangsöffnung (21) und die Luftausgangsöffnung (22) an der Einmündung einer lufttechnischen Kommunikationsleitung (29) in Verbindung mit dem Aufnahmeabteil (4) eingerichtet sind.

10. Modul nach Anspruch 9, **dadurch gekennzeichnet, dass** in der lufttechnischen Kommunikationsleitung (29) eine Trennwand (30) der Lufteingangs- (21) und -ausgangsöffnungen (22) untergebracht ist.

11. Modul nach Anspruch 10, **dadurch gekennzeichnet, dass** das Verteilungsorgan (27) in der Öffnungsstellung gegen die Trennwand (30) in Anschlag kommt.

12. Modul nach einem der Ansprüche 1 bis 11, **dadurch gekennzeichnet, dass** die Lufteingangsöffnung (21) mit einem Wasserabscheider (25) und/oder einem Partikelfilter (26) versehen ist, die vor der ersten Vorrichtung (11) angeordnet sind.

## Claims

1. Control module (5) for controlling the temperature of an electric power source (1) of a motor vehicle, the control module (5) having a casing (3) delimiting a reception compartment (4) for receiving the electric power source (1), at least one thermoelectric cell (6) disposed at the edge of the reception compartment (4),
the thermoelectric cell (6) having:
o a first face (7) in contact with a first fluid (9) contained inside the reception compartment (4), such that the electric power source (1) is in contact with the first fluid (9), the thermoelectric cell (6) being able to modify the temperature of a first fluid (9), and
o a second face (8) in contact with a second fluid (10),
the reception compartment (4) accommodating at least partially a first circulation device (11) for circulating the first fluid (9), said device being disposed at least partially within a first circulation channel (12) for circulating the first fluid (9), said channel being formed within the reception compartment (4) and integrating the first face (7),
**characterized in that** the first fluid (9) is air, said casing (3) being equipped with at least one air inlet (21) and at least one air outlet (22) for, respectively, an intake into the reception compartment (4) and a discharge from the compartment (4) of a flow of circulation air (23).

2. Module according to Claim 1, **characterized in that** the first device (11) is formed by a first pulser.

3. Module according to any one of the preceding claims, **characterized in that** the casing (3) has a second circulation channel (3) for circulating a second fluid (10), said channel integrating a second face (8) of the thermoelectric cell (6).

4. Module according to any one of Claims 1 to 3, **characterized in that** the second fluid (10) is air.

5. Module according to Claims 3 and 4, **characterized in that** the first device (11) has a double turbine having a first turbine (31) accommodated inside the first channel (12) and a second turbine (32) accommodated inside the second channel (13).

6. Module according to Claim 4, **characterized in that** the second circulation channel accommodates a second device (14) for circulating the second fluid (10).

7. Module according to any one of the preceding claims, **characterized in that** the casing (3) is formed by an adiabatic enclosure.

8. Module according to Claim 1, **characterized in that** the air inlet (21) and the air outlet (22) are jointly equipped with an air distribution element (27), which can be manoeuvred between a closed position, in which the distribution element (27) simultaneously seals the air inlet (21) and the air outlet (22), and an open position, in which the distribution element (27) simultaneously allows the discharge of the flow of circulation air (23) from the reception compartment (4) to outside the reception compartment (4) via the air outlet (22) and the intake of the flow of circulation air (23) from outside the reception compartment (4) to the reception compartment (4) via the air inlet (21).

9. Module according to Claim 8, **characterized in that** the air inlet (21) and the air outlet (22) are formed at the exit of an aeraulic communication conduit (29) in conjunction with the reception compartment (4).

10. Module according to Claim 9, **characterized in that** the aeraulic communication conduit (29) accommodates a partition (30) separating the air inlet (21) and outlet (22).

11. Module according to Claim 10, **characterized in that** the distribution element (27) in the open position abuts the partition (30).

12. Module according to one of Claims 1 to 11, **characterized in that** the air inlet (21) is equipped with a water separator (25) and/or a particle filter (26), which are/is disposed upstream of the first device (11).
